**Europäisches Patentamt**

**European Patent Office**

**Office européen des brevets**

(19)

(11) Veröffentlichungsnummer : **0 344 430 B1**

(12)

# EUROPÄISCHE PATENTSCHRIFT

(45) Veröffentlichungstag der Patentschrift :
**27.01.93 Patentblatt 93/04**

(51) Int. Cl.$^5$ : **C04B 11/26,** C04B 28/14,
// (C04B28/14, 22:14, 24:12)

(21) Anmeldenummer : **89106119.4**

(22) Anmeldetag : **07.04.89**

(54) **Verfahren zur Herstellung eines für die Produktion von Gipskartonplatten geeigneten Stuckgipses aus REA-Gips.**

(30) Priorität : **03.06.88 DE 3818992**

(43) Veröffentlichungstag der Anmeldung :
**06.12.89 Patentblatt 89/49**

(45) Bekanntmachung des Hinweises auf die
Patenterteilung :
**27.01.93 Patentblatt 93/04**

(84) Benannte Vertragsstaaten :
**AT BE CH DE ES FR GB GR IT LI LU NL SE**

(56) Entgegenhaltungen :
**EP-A- 0 008 947**
**EP-A- 0 230 793**
**DE-A- 2 903 515**
**DE-A- 3 048 506**
**US-A- 4 502 901**

(73) Patentinhaber : **Rigips GmbH**
**Rühler Strasse**
**W-3452 Bodenwerder (DE)**

(72) Erfinder : **Rennen, Heinz Dr.**
**Junkergrund 25**
**W-3452 Bodenwerder (DE)**
Erfinder : **Hilscher, Gerald Chem.-Ing.**
**Schillerstrasse 51**
**W-3280 Bad Pyrmont (DE)**
Erfinder : **Beck, Horst**
**Justus-Kiepe-Strasse 16**
**W-3250 Hameln (DE)**
Erfinder : **Die andere Erfinder haben auf ihre**
**Nennung verzichtet**

(74) Vertreter : **Rücker, Wolfgang, Dipl.-Chem.**
**Patentanwalt**
**Bergiusstrasse 2b**
**W-3000 Hannover 51 (DE)**

EP 0 344 430 B1

**Beschreibung**

Die Gipskartonplatte ist ein Baumaterial, welches sich weltweit größter Beliebtheit und Anwendung erfreut und in den letzten Jahrzehnten eine rasante Entwicklung in der Welt erfahren hat.

So wurden beispielsweise in den USA im Jahre 1978 pro Kopf der Bevölkerung 6 m² Gipskartonplatten produziert. Auch in der Bundesrepublik Deutschland sind Gispkartonplatten in universeller Anwendung und durch verschiedenen Normen geregelt.

Die Herstellung der Gipskartonplatte erfolgt im kontinuierlichen Betrieb auf großen Bandanlagen. Die wichtigsten Teile der Produktionsanlage sind der
- Kartonzulauf unten, der die Ansichtsseite der Platte mit der Kantenformung bildet,
- Gipsbreizulauf und die Verteilung durch Kalibrierwalzen mit gleichzeitigem Kartonzulauf oben, der die Rückseite der Platte bildet,
- die Abbindestrecke mit Schneidvorrichtungen als Schere,
- Wendetisch mit Eintragung in den Mehretagentrockner und
- Austrag und Plattenbündelung.
Der Abbindevorgang der Gipskartonplatte sowie Länge und Bandgeschwindigkeit der Abbindestrecke sind aufeinander abgestimmt. Moderne Produkttionsanlagen mit hohen Bandgeschwindigkeiten können Abbindestrecken bis zu 300 m umfassen. Als Rohstoff wird sowohl Stuckgips aus natürlichen Gipsvorkommen eingesetzt, als auch Chemiegips, ein synthetischer Rohgips, wie er beispielsweise bei der Naßphosphorsäuregewinnung anfällt. Die auf dem Band gefertigten Gipskartonplatten bestehen aus einem breit ausgewalzten Gipskern, der einschließlich der Längskanten mit Karton ummantelt ist, während die geschnittenen Querkanten den Gipskern zeigen. Der Karton ist mit dem Gipskern fest verbunden. Der Gipskern kann geeignete Zuschlag- oder Zusatzstoffe enthalten und aufgeport sein. Die auf dem Band gefertigte endlose Gipskartonplatte ist eben und wird rechteckig und in der Regel großflächig auf Längen zwischen 200 und 450 cm geschnitten. Sie ist 125 cm breit und besitzt Dicken zwischen 9,5 und 25 mm. Die hierfür gültige Baustoffnorm ist die DIN 18 180.

Gipskartonplatten unterscheidet man nach ihrer Fertigung und nach ihrer Verwendung, für den sie gemäß ihrer Beschaffenheit bestimmt sind.

Man unterscheidet daher zwischen
Gipskarton-Bauplatten,
Gipskarton-Feuerschutzplatten,
Gipskarton-Putzträgerplatten und
Imprägnierte Gipskartonplatten.
Letztere werden wieder unterschieden in
Gipskarton-Bauplatten, imprägniert und
Gipskarton-Feuerschutzplatten, imprägniert.

Außerdem gibt es beschichtete Gipskartonplatten mit festen Schichten, Folien oder aus plastischen Massen. Die Beschichtung richtet sich nach dem Verwendungszweck, wie etwa
Folien aus Kunststoff oder Aluminium als Dampfsperre,
Folien aus Kunststoff für dekorative Zwecke,
Folien aus Walzblei zur Dämpfung von Röntgenstrahlen,
Bleche aus Kupfer für Dekorzwecke und
plastische Massen mit oder ohne Einlage von Gewebe
zur Verbesserung der Oberflächenhärte oder für dekorative
Oberflächenstrukturen.

Dann gibt es Gipskartonplatten, die rückseitig mit Dämmstoffen beklebt sind und die als Verbundplatten bezeichnet werden. Schließlich gibt es Platten aus Gipskarton, die mit unterschiedlichen Löchern und Schlitzen ausgestattet sind und die als dekorative schallschluckende Wand- und Deckenbekleidungen verwendet werden. Besonders wichtig bei einer Gipskartonplatte ist, die Ausgestaltung der Kanten. Es gibt unterschiedliche Kantenformen.
- abgeflachte Kanten,
- volle Kanten,
- runde Kanten,
- Winkelkanten,
- runde, abgeflachte Kanten und
- keilförmige Kanten.

Die rasante Verbreitung der Gipskartonplatte erfolgt im wesentlichen aufgrund der Eigenschaften der Gipskartonplatte. Diese beruhen nämlich auf der Verbundwirkung von Gipskern und Kartonummantelung. Der Karton wirkt als Zugbewehrung und verleiht den Platten die notwendige Steifigkeit. Dadurch können trotz geringer

2

EP 0 344 430 B1

Dicke, mit Gipskartonplatten beträchtliche Spannweiten überbrückt werden. Andererseits sind die Platten leicht. Sie lassen sich einfach transportieren, handhaben und bearbeiten. Ihre Biegeweichheit ist eine wichtige Voraussetzung für die Ausführung schalldämmender Bauteile.

Die Kartonoberfläche wiederum ist ein sehr guter Untergrund für Anstriche und Beschichtungen, insbesondere für das Verkleben von Tapeten, Fliesen und sonstigen Belägen.

Die Kartonbeschichtung hat für die Qualität der Platte eine große Bedeutung. Hierauf beruhen auch die unterschiedlichen Eigenschaften der Platte, die richtungsabhängig sind. So sind Festigkeit und Elastizität in Richtung der Kartonfaser, d. h. in Längsrichtung der Platten, größer als quer zur Richtung der Kartonfaser. Dies ist bei der praktischen Verarbeitung zu berücksichtigen, da beispielsweise die größere Biegezugfestigkeit und der größere Verformungswiderstand durch die Längsbefestigung der Platten vorteilhaft ausgenutzt werden können.

Die Gipskartonplatte hat auch insbesondere im geporten Zustand vorteilhafte Eigenschaften, weil sie in der Lage ist, Feuchtigkeit aufzunehmen und sie wieder schnell abzugeben, was beispielsweise bei Beton nicht der Fall ist (Hanusch, "Gipskartonplatten", Trockenbau, Montagebau, Ausbau, 1978).

Im Zuge der verstärkten Rückbesinnung der Menschheit auf natürliche Lebensweisen und damit auf eine reine Umwelt in der weder Land noch Wasser noch Luft mit schädlichen Stoffen verschmutzt sind, ist man mehr und mehr dazu übergegangen, die Rauchgase von Großfeuerungsanlagen, insbesondere von Kraftwerken zu reinigen, d. h. nach der schon früher erfolgten Abscheidung der im Rauchgas enthaltenen Stäube sind nun auch schädliche chemische Verbindungen zu entfernen, nämlich das Schwefeldioxid ($SO_2$).

Bei der Abscheidung des Schwefeldioxids fällt Gips (Kalziumsulfatdihydrat) an, das wiederum von der Gips verarbeitenen Industrie verwertet wird, zumal die natürlichen Gipsvorkommen entweder fehlen, nur im geringen Maße vorhanden sind, oder ebenfalls aus Gründen der Erhaltung der Natur nicht abgebaut werden sollen. Die Gips verarbeitende Industrie hat sich daher frühzeitig mit diesem als Rauchgasentschwefelungsgips anfallenden Gips befaßt.

So ist es beispielsweise bekannt, diesen Rauchgasentschwefelungsgips, im nachfolgenden REA-Gips genannt, zu verschiedenen Halbhydraten aufzuarbeiten und sie anstelle von Naturgips einzusetzen (Ullmann, 4. Aufl. 1976, Bd. 12, S. 302).

Aus der US-PS 4 502 901 ist es bekannt REA-Gips zur Herstellung von Gipsplatten zu verarbeiten. Dazu wird der mit 10 bis 15 % freier Feuchte anfallende REA-Gips in einem Flashtrockner auf den Wassergehalt 0 getrocknet, dann gebrannt, um 75 % des Kristallwassers zu entfernen und schließlich auf das doppelte seiner Oberfläche gemahlen.

Mit einem solchermaßen hergestellten Gips soll die Herstellung von Gipskartonplatten gelingen.

Die bei der Rauchgasentschwefelungsanlage anfallenden Gipse besitzen jedoch eine Reihe von nachteiligen Eigenschaften, die eine direkte Verarbeitung erschweren, auch dann, wenn der REA-Gips zunächst auf die Feuchte 0 getrocknet wird, gebrannt und gemahlen wird. Aufgrund ihrer Entstehungsgeschichte haben REA-Gipse wegen ihres sehr engen Kornbandes in Pulverform ein so gutes Fließvermögen, daß unerwünschte Schwierigkeiten in den als Förderorgane eingesetzten Elevatoren entstehen. Suspensionen aus ungemahlenem REA-Gips und Wasser verhalten sich beim Anrühren ausgesprochen zäh. Sie zeigen ein ausgeprägtes thixotropes Verhalten, besitzen eine schlechte Fließfähigkeit und haben gegenüber Naturgips einen sehr viel höheren Wasseranspruch.

Insbesondere letzterer ist für die Herstellung von Gipskarton platten im kontinuierlichen an sich bekannten Verfahren unter wirtschaftlichen Betriebsbedingungen äußerst nachteilig.

Aufgabe der vorliegenden Erfindung ist es daher, ein Verfahren vorzuschlagen, mit dem ein dem Naturgips gleichwertiges Produkt aus REA-Gips herstellbar ist und welches sich zur Herstellung von Gipskartonplatten der unterschiedlichsten Art und für die unterschiedlichsten Zwecke und Anwendungen eignet.

Erfindungsgemäß wird das dadurch erreicht, daß der getrocknete REA-Gips in einem mit einem konischen Brennraum ausgestatteten Kocher kontinuierlich gebrannt wird, sodann das Brennprodukt in einer Kugel order Schwingmühle Mühle mit hoher Energiebeaufschlagung gemahlen und das gemahlene Produkt mit Wassermengen zwischen 1 und 8 Gew.-% 1 bis 3 Minuten vor dem Anmachen des Gipses vorbefeuchtet wird.

Das Brennen des getrockneten REA-Gips in einem konischen Kocher in dem sich das Brenngut kontinuierlich hindurchbewegt und dabei quasi ein Fließbett bildet, ergibt ein sehr homogenes einheitliches Brennprodukt bei einem ausgezeichneten Wirkungsgrad in der Größenordnung von 82 %.

Der sich an das Brennen anschließende Mahlprozeß soll mit hoher Energiebeaufschlagung erfolgen, in einer Kugelmühle. Dadurch wird die Fließfähigkeit des mit Wasser angemachten Breies (Slurry) und damit die Kristalltracht verbessert und wiederum ein geringerer Wasseranspruch, trotz der größeren Oberfläche erreicht. Es wurde gefunden, daß das Mahlen in einer gepanzerten Rohrmühle bestückt mit Stahlkugeln mit einem Durchmesser von 20 bis 25 mm, vorzugsweise 22 mm und sogenannten Klopfkugeln mit einem Durchmesser von etwa 80 mm zum ständigen Reinigen der zum verpelzen neigenden kleinen Kugeln dem Produkt

3

besonders gute und vorteilhafte Verarbeitungseigenschaften gibt. Die Umlaufgeschwindigkeit der Mühle wird entsprechend der üblichen Technik eingestellt.

Die sich anschließende Behandlung des getrockneten und gemahlenen Gipses mit einer kleinen Wassermenge von 1 bis 8 Gew.-%, vorzugsweise 5 Gew.-% Wasser und einer Verweilzeit zum Ausheilen der Oberfläche von 1 bis 3 Minuten, ehe die Einspeisung in dem Gipsmischer erfolgt, verbessert die Konsistenz des Produktes.

Die Verarbeitung der im Gipsmischer erzeugten Slurry geschieht dann weiter wie an sich bekannt. Der Slurry können Stellmittel bekannterweise oder sonstige Additive zugesetzt werden.

Anstelle der Kugelmühle kann falls gewünscht oder vorhanden eine Schwingmühle eingesetzt werden. Wichtig ist, daß mit der Mühle eine hohe Energiebeaufschlagung und Aktivierung des aus REA-Gips erzeugten Halbhydrats erreicht wird.

Der durch agglomerierende Mahlung in der Kugel- oder Schwingmühle aufgemahlene REA-Gips zeigt demgegenüber, einen gesenkten Wasseranspruch bei maschinellem Anrühren, eine spezifische Oberfläche, die dem aus Naturgips stammenden Produkt entspricht, ein besseres Anrührverhalten und keine thixotropen Eigenschaften mehr.

Der mit dem Kugel- oder Schwingmühle agglomerierend gemahlene REA-Gips besitzt nach DIN 11 68 einen Wasser-Gips-Faktor (WGF) von 0,66 bei einer Oberfläche nach Blaine (cm$^2$/g) von 4.700 und maschinell angerührt nach Partikelzerfall eine Oberfläche nach Blaine (cm$^2$/g) von 12.000. Das Schüttgewicht des Stuckgipses beträgt 900 g/l.

Die Behandlung des erfindungsgemäßen Produktes im letzten Verfahrensschritt mit vorzugsweise 5 Gew.-% Wasser stellt eine künstliche Alterung dar, die an sich bekannt ist. Sie reduziert den Anmachwasserbedarf. Vorzugsweise geschieht dies in Sprühmischanlagen mit mechanischer Beanspruchung des Schüttgutes, in denen es durch eine starke Verwirbelung und Teilfluidisierung zu einer Trennung der Gipspartikel kommt.

Die so erzeugte große Oberfläche gewährleistet bei gleichzeitiger Bedüsung mit Wasser eine gleichmäßige Befeuchtung eines jeden Einzelkorns.

Das empfindliche Problem der Vorbefeuchtung von Stuckgips kann mit derartigen Mischern großtechnisch durchgeführt werden und bedeutet eine erhebliche Verringerung des Bedarfs an Trocknungsenergie für die erzeugten Gipskartonplatten.

Mischer dieser Art werden beispielsweise von der Firma Schugi gebaut.

Ein nach dem beschriebenen Verfahren vorbefeuchteter und künstlich gealterter Rauchgasentschwefelungsgips hat bei gleichguter Fließfähigkeit der Gips-Wasser-Suspension einen wesentlichen geringeren Wasseranspruch. Die erzielbare Wassereinsparung beträgt bis zu 25 - 30 %. Das bedeutet eine erhebliche Reduzierung an Trocknungsenergie, die ebenfalls in der Größenordnung von 25 - 30 % liegt.

Es wurde festgestellt, daß mit einem in der obigen Weise beschriebenen aufbereiteten REA-Gips sich Gipskartonplatten herstellen lassen, die solchen aus Naturgips entsprechen, besonders vorteilhaft läßt sich dieser aufbereitete REA-Gips für Gipskartonplatten einsetzen, die ein geringes spezifisches Gewicht haben.

In der anschließenden Tabelle sind vergleichsweise Versuche gegenüber gestellt worden zwischen Gipskartonplatten mit einer Dicke von 12,5 mm herstellt einmal nach dem erfindungsgemäßen Verfahren und unter Verwendung von REA-Gips als Ausgangsmaterial und unter Verwendung von Naturgips, der im Drehofen kalziniert wurde.

| | | REA-Gips gemahlen | | | Naturgips Drehofen |
|---|---|---|---|---|---|
| Plattendichte | mm | 12,5 | | | 12,5 |
| Flächengewicht | kg/m² | 12,5 | 11,3 | 9,0 | 11,2 |
| Bruchlast | N | | | | |
| längs | | 690 | 710 | 700 | 675 |
| quer | | 310 | 270 | 250 | 250 |
| Biegezugfestigkeit | N/mm² | | | | |
| längs | | 8,2 | 8,5 | 8,4 | 8,1 |
| quer | | 3,8 | 3,2 | 3,0 | 3,0 |
| Verformung | mm | | | | |
| längs | | 0,40 | 0,44 | 0,68 | 0,45 |
| quer | | 0,43 | 0,57 | 0,74 | 0,55 |
| E-Modul | N/mm² | | | | |
| längs | | 5000 | 4500 | 2900 | 4400 |
| quer | | 4700 | 3500 | 2700 | 3600 |
| Druckfestigkeit | N/mm² | 10,2 | 9,0 | 4,0 | 9,0 |
| Kugeldruckhärte | N/mm² | 18,3 | 17,4 | 6,1 | 17,0 |
| Kartonhaftung | % | 100 | 100 | 100 | 100 |

Bei gezielter Einstellung der Abbindezeit der REA-Gips/Wasser-Suspension durch gleichzeitige Verwendung von Abbindebeschleunigern und Abbindeverzögerern ist es möglich, der Suspension bis zu 20 % REA-DH sowie inerte Füllstoffe wie Kalksteinmehl, Flugasche, Vermiculit zuzusetzen, ohne daß sich das Abbindeverhalten des angemachten Gipses ändert.

Als bevorzugter Beschleuniger wird in Kugelmühlen aktiviertes REA-DH in einer Größenordnung von bis zu 2 % bezogen auf den gebrannten Gips eingesetzt. Als Verzögerer werden vorteilhafte Salze von Polyoxymethylen-Aminosäure verwendet.

Rezeptur für Gipskartonplatten aus REA-Gips für die Herstellung von 1 m² werden für 9,5 mm dicke Platten benötigt

| | | |
|---|---|---|
| 6,7 | kg | REA-Gips calciniert |
| 4,3 | kg | Anmachwasser |
| 0,025 | kg | säuremodifizierte Mais- oder Weizen-stärke |
| 0,002 | kg | nichtionogene und anionische Tenside |
| 0,100 | kg | Kugelmühlen -aktivierter REA-Dihydrat-Beschleuniger |
| 0,001 | kg | Polyoxymethylen-Aminosäure (Ca-Salz) |
| 0,400 | kg | Karton, Dicke 0,3 mm |

Ein Anteil des REA-Gipses kann durch einen Anteil bis zu 20 % Brack ersetzt sein, der auf eine eigene Korngröße aufgemahlen ist. Bei "Brack" handelt es sich um Abfall aus der Gipskartonplatten-Produktion, also um Plattenbruchstücke, wobei gegebenenfalls der Papieranteil durch Sieben und Sichten reduziert sein kann. Brack ist also Bruch von Gipskartonplatten, der bei der Produktion oder Handhabung entsteht und auf geeignete Korngröße gemahlen ist. Außerdem kann der Bindemittelanteil zusätzlich bis zu 20 % Naturgips (Dihydrat) und bis zu 20 % Anhydrit enthalten.

In Verfolgung des Erfindungsgedankens wird das Brennprodukt mit hoher Energiebeaufschlagung in der Mühle auf eine Oberfläche nach Blaine von 2.000 - 6.500 cm/g³ gemahlen vorzugsweise jedoch auf eine Blaine Oberfläche von 3.000 - 5.000 cm²/g.

**Patentansprüche**

1. Verfahren zur Herstellung eines für die Produktion von Gipskartonplatten geeigneten Stuckgipses aus REA-Gips durch Trocknung des REA-Gipses, Brennen und Mahlen auf eine größere Oberfläche, **dadurch gekennzeichnet**, daß der getrocknete REA-Gps in einem mit einem konischen Brennraum ausgestatteten Kocher kontinuierlich gebrannt wird, sodann das Brennprodukt in einer Kugel- oder Schwingmühle mit hoher Energiebeaufschlagung gemahlen und das gemahlene Produkt mit Wassermengen zwischen 1 und 8 Gew.-% 1 - 3 Minuten vor dem Anmachen des Gipses vorbefeuchtet wird.

2. Verfahren nach Anspruch 1, dadurch gekennzeichnet, daß das getrocknete und gemahlene Halbhydrat mit kleinen Wassermengen von 1 bis 8 Gew.-% vorbefeuchtet und daß eine Verweilzeit vor der Weiterverarbeitung von 1 bis 3 Minuten eingehalten wird.

3. Verfahren nach Anspruch 2, dadurch gekennzeichnet, daß die zugesetzte Wassermenge vorzugsweise 5 Gew.-% beträgt.

4. Verfahren nach Anspruch 1 bis 3, dadurch gekennzeichnet, daß dem Stuckgips ein Anteil bis zu 20 Gew.-% REA-Dihydrat zugesetzt werden.

5. Verfahren nach Anspruch 1 bis 4 dadurch gekennzeichnet, daß inerte Füllstoffe wie Kalksteinmehl, Flugasche und Vermiculit zugesetzt werden.

6. Verfahren nach Anspruch 1 bis 5, dadurch gekennzeichnet, daß dem Stuckgips als Beschleuniger ein in Kugelmühlen aktiviertes REA-Dihydrat in einer Menge bis zu 2 Gew.-% bezogen auf den gebrannten Gips und als Verzögerer Salze von Polyoxymethylen-Aminosäure zugesetzt werden.

7. Verfahren nach Anspruch 1 bis 3, dadurch gekennzeichnet, daß der sich an das Brennen anschließende Mahlprozeß in einer Kugelmühle durchgeführt wird mit Stahlkugeln mit einem Durchmesser von 20 bis 25 mm, vorzugsweise 22 mm und Klopfkugeln mit einem Durchmesser von 80 mm.

8. Verfahren nach Anspruch 1 bis 7, dadurch gekennzeichnet, daß das Brennprodukt in einer Mühle mit hoher Energiebeaufschlagung auf eine Oberfläche von 2.000 - 6.500 cm$^2$/g vorzugsweise auf 3.000 - 5.000 cm$^2$/g gemahlen wird.

## Claims

1. A method for producing plaster of Paris suitable for the production of gypsum boards from gypsum from flue gas desulfurization by drying said gypsum from flue gas desulfurization, burning and grinding it on a larger surface, characterized in that the dried gypsum from flue gas desulfurization is continuously burned in a kiln having a conical combustion space, whereafter the burned product is ground under high energy impact in a ball mill or a vibration grinding mill and the ground product is premoistened with an amount of water between 1 and 8 percent in weight 1 to 3 minutes before mixing the plaster.

2. A method according to claim 1, characterized in that the dried and ground hemihydrate is premoistened with small amounts of water from 1 to 8 percent in weight and that a retention time of 1 to 3 minutes is observed before further processing.

3. A method according to claim 2, characterized in that the amount of water added is preferably 5 percent in weight.

4. A method according to claim 1 to 3, characterized in that a portion of 20 percent in weight of dihydrate from flue gas desulfurization is added to said plaster of Paris.

5. A method according to claim 1 to 4, characterized in that inert filling materials such as lime powder, flue ash, and vermiculite are added.

6. A method according to claim 1 to 5, characterized in that dihydrate from flue gas desulfurization activated in ball mills is added to said plaster of Paris as an accelerator in an amount of up to 2 percent in weight on the basis of the burned gypsum, and salts of polyoxymethylene amino acids are added as restrainers.

7. A method according to claim 1 to 3, characterized in that the grinding process following the burning is performed in a ball mill with steel balls having a diameter of 20 to 25 mm, preferably 22 mm, and beating balls with a diameter of 80 mm.

8. A method according to claim 1 to 7, characterized in that the burned product is ground in a mill under high energy impact on a surface of 2,000 - 6,500 cm$^2$/g, preferably on 3,000 - 5,000 cm$^2$/g.

## Revendications

1. Procédé de fabrication de plâtre à stuc, convenant à la production de carreaux de plâtre, à partir de gypse de désulfuration des gaz de fumées par séchage dudit gypse de désulfuration des gaz de fumées, cuisson et broyage en vue d'obtenir une plus grande surface, caractérisé en ce que ledit gypse de désulfuration des gaz de fumées séché est cuit en continu dans un four équipé d'une chambre de cuisson conique, que le produit de la cuisson est broyé ensuite dans un broyeur à boulets ou à cuve vibrante ayant une forte puissance de broyage et que le produit broyé est pré-humidifié avec une quantité d'eau comprise entre 1 et 8 % pendant une durée de 1 à 3 minutes avant le gâchage du plâtre.

2. Procédé selon la revendication 1, caractérisé en ce que l'hémihydrate séché et broyé est pré-humidifié avec de petites quantités d'eau comprises entre 1 et 8 % en poids et que l'on observe un temps de séjour de 1 à 3 minutes avant transformation.

3. Procédé selon la revendication 2, caractérisé en ce que l'on ajoute de préférence 5 % en poids d'eau.

4.  Procédé selon les revendications 1 - 3, caractérisé en ce que l'on ajoute jusqu'à 20 % en poids de dihydrate de désulfuration des gaz de fumées au plâtre à stuc.

5.  Procédé selon les revendications 1 - 4, caractérisé en ce que l'on ajoute des charges inertes telles que chaux pulvérisée, cendres volantes et vermiculite.

6.  Procédé selon les revendications 1 - 5, caractérisé en ce que l'on ajoute au plâtre à stuc, comme accélérateur, un dihydrate de désulfuration des gaz de fumées activé dans des broyeurs à boulets à raison d'une quantité ne dépassant pas 2 % en poids par rapport au plâtre cuit et, comme retardateur, des sels d'amino-acide de polyoxyméthylène.

7.  Procédé selon les revendications 1 - 3, caractérisé en ce que le broyage qui fait suite à la cuisson est effectué dans un broyeur à boulets comportant des boulets en acier ayant un diamètre compris entre 20 et 25 mm, de préférence 22 mm, et des boulets percuteurs de 80 mm de diamètre.

8.  Procédé selon les revendications 1 - 7, caractérisé en ce que le produit de cuisson est broyé dans un broyeur ayant une importante puissance de broyage de façon à ce que l'on obtienne une surface comprise entre 2 000 et 6 500 $cm^2/g$ et de préférence entre 3 000 et 5 000 $cm^2/g$.